# EUROPÄISCHE PATENTANMELDUNG

(11) **EP 2 647 886 A1**
(43) Veröffentlichungstag der Anmeldung: **09.10.2013**
(21) Anmeldenummer: 13161283.0
(22) Anmeldetag: 27.03.2013
(51) Int. Cl.: F16H 61/14, F16H 45/02

(54) **Drehmomentwandler für Kraftfahrzeuge**

(30) Priorität: 04.04.2012 DE 102012205535
(71) Anmelder: Ford Global Technologies, LLC, Dearborn, MI 48126 (US)
(72) Erfinder: Bertram, Ulrich, 50129 Bergheim (DE)
(74) Vertreter: Dörfler, Thomas

(57) **Zusammenfassung**

Die Erfindung betrifft einen Drehmomentwandler (10) für ein Kraftfahrzeug, mit einer Motorabtriebswelle (14), einer Getriebeeingangswelle (16), einem Pumpenrad (18), einer Turbine (22) sowie einer Überbrückungskupplung (26, 28, 30, 32) zwischen Motorabtriebswelle (14) und Getriebeeingangswelle (16). Gemäß der Erfindung ist die Überbrückungskupplung (26, 28, 30, 32) dafür eingerichtet, die Getriebeeingangswelle (16) entweder mit der Motorabtriebswelle (14) oder mit der Turbine (22) oder mit keiner von beiden zu kuppeln.

## Beschreibung

Die Erfindung betrifft einen Drehmomentwandler für ein Kraftfahrzeug, mit einer Motorabtriebswelle, einer Getriebeeingangswelle, einem Pumpenrad, einer Turbine sowie einer Überbrückungskupplung zwischen Motorabtriebswelle und Getriebeeingangswelle.

Die DE 10 2007 053 970 A1 offenbart einen derartigen Drehmomentwandler, der eine zusätzliche Kupplung aufweist, mit welcher die Getriebeeingangswelle von der Turbine entkoppelt werden kann, um bei einem Kraftfahrzeug mit Hybridantrieb Schleppverluste im Leerlauf zu vermeiden. Dieser Drehmomentwandler wird über drei äußere Anschlüsse für Hydraulikfluid gesteuert.

Der Erfindung liegt die Aufgabe zugrunde, einen möglichst einfach aufgebauten und möglichst einfach steuerbaren Drehmomentwandler mit Überbrückungskupplung bereitzustellen, bei dem die Getriebeeingangswelle von der Turbine entkoppelt werden kann, um einen möglichst verlustfreien Motorleerlauf und einen sanften Übergang zwischen Antriebsbetrieb und Leerlaufbetrieb zu ermöglichen.

Diese Aufgabe wird durch einen Drehmomentwandler gemäß Anspruch 1 gelöst.

Gemäß der Erfindung bildet die Überbrückungskupplung, welche gewöhnlich auch "Lock-Up" genannt wird, eine Art Zweiweg-Kupplung, welche die Getriebeeingangswelle entweder mit der Motorabtriebswelle oder mit der Turbine oder mit keiner von beiden kuppelt. Daher kann dieser Drehmomentwandler wesentlich einfacher aufgebaut sein als bekannte Drehmomentwandler, bei denen die Getriebeeingangswelle von der Turbine abkoppelbar ist, weil hierfür bisher zwei separate Kupplungen erforderlich waren. Somit kann der erfindungsgemäße Drehmomentwandler praktisch ebenso kompakt aufgebaut sein wie ein Drehmomentwandler ohne die Möglichkeit, die Getriebeeingangswelle von der Turbine zu entkoppeln. Folglich kann man einen erfindungsgemäßen Drehmomentwandler in existierende Motorbaureihen integrieren, die man für Drehmomentwandler ohne Entkopplungsmöglichkeit von Getriebeeingangswelle ausgelegt hat, und damit auch in existierenden Motorbaureihen einen verlustarmen Motorleerlauf, sanfte Übergänge zwischen Antriebsbetrieb und Leerlaufbetrieb und im Falle eines Hybridantriebs geringere Leerlauf-Schleppverluste realisieren.

In einer bevorzugten Ausführungsform der Erfindung weist der Drehmomentwandler genau zwei äußere Anschlüsse für Hydraulikfluid auf, nämlich einen Anschluss für unter einem Wandlerladedruck (CC) stehendes Hydraulikfluid und einen Anschluss für unter einem Wandlerentladedruck (CDC) stehendes Hydraulikfluid, wobei die Überbrückungskupplung vorzugsweise ein im Wesentlichen scheibenförmiges, fluiddichtes Kupplungselement aufweist, das auf einer Seite von dem unter Wandlerladedruck stehenden Hydraulikfluid beaufschlagt wird und auf einer entgegengesetzten Seite von dem unter Wandlerentladedruck stehenden Hydraulikfluid beaufschlagt wird, wobei vorzugsweise die Differenz zwischen Wandlerladedruck und Wandlerentladedruck festlegt, ob die Überbrückungskupplung die Getriebeeingangswelle mit der Motorabtriebswelle oder mit der Turbine oder mit keiner von beiden kuppelt.

Auf diese Weise ist es möglich, mit nur zwei Anschlüssen für Hydraulikfluid auszukommen und die beiden Drücke, die zur Steuerung des Drehmomentwandlers verwendet werden, nämlich den Wandlerladedruck und den Wandlerentladedruck, auch zur Steuerung der erfindungsgemäßen Überbrückungskupplung zu verwenden. Einen derartigen Drehmomentwandler kann man leicht in existierende Motorbaureihen einbauen, die man für Drehmomentwandler mit nur zwei Anschlüssen ausgelegt hat, und damit auch in solchen Motorbaureihen einen verlustarmen Motorleerlauf, sanfte Übergänge zwischen Antriebsbetrieb und Leerlaufbetrieb und geringere Leerlauf-Schleppverluste realisieren.

Insbesondere kann die Überbrückungskupplung die Getriebeeingangswelle mit der Motorabtriebswelle kuppeln, wenn der Wandlerladedruck kleiner als der Wandlerentladedruck ist, und mit der Turbine kuppeln, wenn der Wandlerladedruck größer als der Wandlerentladedruck ist. Wenn der Wandlerladedruck im Wesentlichen gleich dem Wandlerentladedruck ist, kann die Überbrückungskupplung von beiden Seiten entkoppelt sein.

Da der Wandlerladedruck und der Wandlerentladedruck voneinander verschieden sind, wenn die Überbrückungskupplung die Getriebeeingangswelle mit der Motorabtriebswelle oder mit der Turbine kuppelt, ist gewährleistet, dass auch im nicht überbrückten Zustand, wenn die Getriebeeingangswelle mit der Turbine gekuppelt ist, genügend Hydraulikfluid durch den Drehmomentwandler strömen kann, um diesen zu kühlen.

In einer konstruktiv besonders einfachen Ausführungsform der Erfindung enthält die Überbrückungskupplung ein im Wesentlichen scheibenförmiges Kupplungselement, das sich rings um die Getriebeabtriebswelle erstreckt und drehfest damit verbunden ist, wobei ein ringförmiger radial äußerer Abschnitt des scheibenförmigen Kupplungselements zwei einander axial entgegengesetzte Reibflächen aufweist, von denen die eine Reibfläche einer fest mit der Motorabtriebswelle verbundenen Reibfläche gegenüberliegt und die andere Reibfläche einer fest mit der Turbine verbundenen Reibfläche gegenüberliegt. Die fest mit der Motorabtriebswelle verbundene Reibfläche ist vorzugsweise eine Reibfläche an einem Wandlergehäuse, welches fest mit der Motorabtriebswelle verbunden ist und das Pumpenrad trägt. Die fest mit der Turbine verbundene Reibfläche befindet sich vorzugsweise auf einem ringförmigen Vorsprung außen an der Turbine.

Die Überbrückungskupplung kann auch einen Torsionsdämpfer aufweisen, wie im Stand der Technik üblich, wobei der Torsionsdämpfer in das scheibenförmige Kupplungselement integriert sein kann.

Es folgt eine Beschreibung von Ausführungsbeispielen anhand der Zeichnung. Darin zeigen:
- Fig. 1: eine Schnittansicht durch einen Drehmomentwandler in einem Zustand, in dem die Getriebeeingangswelle mit einer Motorabtriebswelle gekuppelt ist;
- Fig. 2: eine Schnittansicht durch einen Drehmomentwandler in einem Zustand, in dem die Getriebeeingangswelle mit einer Turbine gekuppelt ist; und
- Fig. 3: eine Schnittansicht durch einen Drehmomentwandler in einem Zustand, in dem die Getriebeeingangswelle nicht gekuppelt ist.

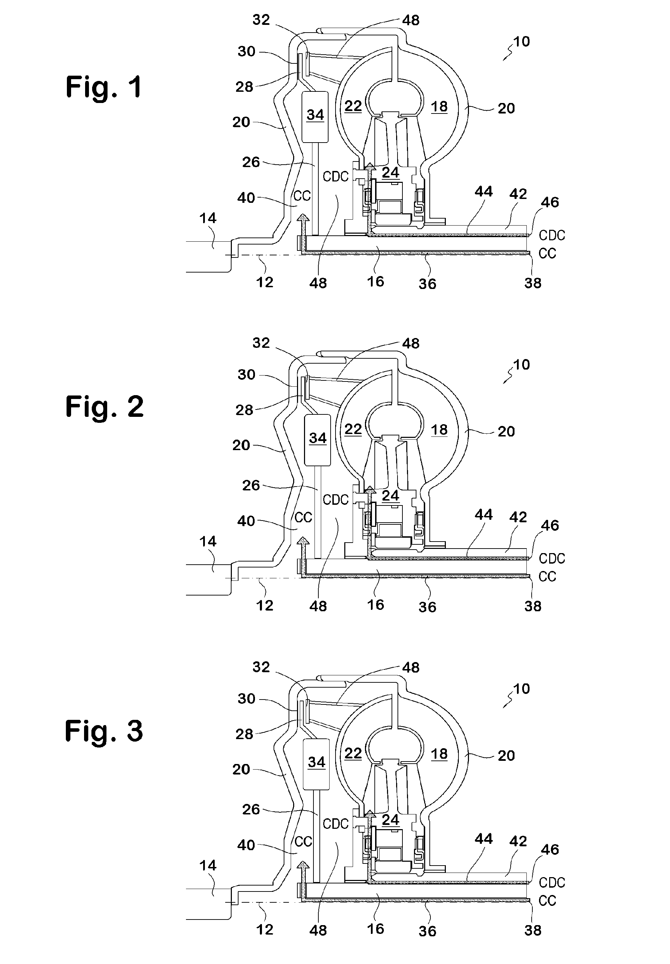

Figuren 1 bis 3 zeigen jeweils einen Schnitt durch einen Drehmomentwandler 10, der im Wesentlichen um eine Mittelachse 12 rotationssymmetrisch ist. Der Drehmomentwandler 10 enthält eine Motorabtriebswelle 14 und eine Getriebeeingangswelle 16, die sich jeweils entlang der Mittelachse 12 erstrecken, ein Pumpenrad 18, das um die Getriebeeingangswelle 16 drehbar gelagert und über ein Wandlergehäuse 20, das ebenfalls um die Getriebeeingangswelle 16 drehbar gelagert ist, drehfest mit der Motorabtriebswelle 14 verbunden ist, eine Turbine 22, die um die Getriebeeingangswelle 16 drehbar gelagert ist, ein Leitrad 24 und eine Überbrückungskupplung.

Die Überbrückungskupplung enthält ein im Wesentlichen scheibenförmiges Kupplungselement 26, das sich rings um die Getriebeeingangswelle 16 erstreckt und drehfest mit dieser verbunden ist, zweckmäßigerweise mittels einer Vielzahnverbindung, die gleichzeitig eine axiale Verschiebung gegenüber der Getriebeeingangswelle 16 erlaubt. Das scheibenförmige Kupplungselement 26 hat einen ringförmigen radial äußeren Abschnitt 28, der zwischen einer ersten, auf einer Innenfläche des Wandlergehäuses 20 ausgebildeten Reibfläche 30 und einer zweiten, fest mit der Turbine 22 verbundenen Reibfläche 32 liegt und jeweils eine der beiden Reibflächen 30, 32 oder keine davon berühren kann, wenn das scheibenförmige Kupplungselement 26 axial bewegt wird. Die fest mit der Turbine 22 verbundene Reibfläche 32 wird von einem ringförmigen Vorsprung 48 abgestützt, der sich von der Außenseite der Turbine 22 in Richtung auf den radial äußeren Abschnitt 28 des Kupplungselements 26 erstreckt. In das Kupplungselement 26 ist ein nur schematisch dargestellter Torsionsdämpfer 34 integriert. Die Überbrückungskupplung wird somit durch die Teile 26, 28, 30, 32 und 34 gebildet.

Die Getriebeeingangswelle 16 ist als Hohlwelle ausgeführt und enthält einen ersten, zentralen Fluidkanal 36, über den unter Wandlerladedruck CC stehendes Hydraulikfluid von einem ersten Fluidanschluss 38 zum einen dem Pumpenrad 18 (dieser Weg ist nicht gezeigt) und zum anderen einem Raum 40 zwischen dem Wandlergehäuse 20 und dem scheibenförmigen Kupplungselement 26 zugeführt bzw. davon abgeleitet werden kann. Ring um einen axialen Abschnitt der Getriebeeingangswelle 16 herum erstreckt sich eine weitere Hohlwelle 42. Die Getriebeeingangswelle 16 und die weitere Hohlwelle 42 grenzen einen zweiten, radialen Fluidkanal 44 zwischen sich ab, über den unter Wandlerentladedruck CDC stehendes Hydraulikfluid von einem zweiten Fluidanschluss 46 zum einen dem Leitrad 24 und zum anderen einem Raum 48 zwischen der Turbine 22 und dem scheibenförmigen Kupplungselement 26 zugeführt bzw. davon abgeleitet werden kann. Eine derartige Zweikanal-Hydraulikfluidführung kann statt mit einem zentralen Fluidkanal 36 und einem radialen Fluidkanal 44 alternativ mit zwei radialen Fluidkanälen gebildet werden.

Wenn der Wandlerladedruck CC kleiner als der Wandlerentladedruck CDC ist, wird der radial äußere Abschnitt 28 des scheibenförmigen Kupplungselements 26 gegen die Reibfläche 30 innen am Wandlergehäuse 20 gepresst, wie in Fig. 1 gezeigt, und der Drehmomentwandler 10 befindet sich in einem Lock-Up-Zustand. In diesem Zustand ist das Ausgangsdrehmoment genau gleich dem Eingangsdrehmoment, d.h. gleich dem Drehmoment des Verbrennungsmotors, der die Motorabtriebswelle 14 antreibt. Hydraulikfluid strömt über den zweiten Fluidanschluss 46 ein und über den ersten Fluidanschluss 38 aus.

Wenn der Wandlerladedruck CC größer als der Wandlerentladedruck CC ist, wird der radial äußere Abschnitt 28 des scheibenförmigen Kupplungselements 26 gegen die turbinenfeste Reibfläche 32 gepresst, wie in Fig. 2 gezeigt, und der Drehmomentwandler 10 befindet sich in einem Betriebszustand mit Drehmomentwandlung In diesem Zustand ist das Ausgangsdrehmoment gleich dem Eingangsdrehmoment multipliziert mit einem Drehmomentwandlungsfaktor. Hydraulikfluid strömt über den ersten Fluidanschluss 38 ein und über zweiten Fluidanschluss 46 aus.

Wenn der Wandlerladedruck CC gleich dem Wandlerentladedruck CC ist, kann sich der radial äußere Abschnitt 28 des scheibenförmigen Kupplungselements 26 frei zwischen den Reibflächen 30 und 32 drehen, wie in Fig. 3 gezeigt, und der Drehmomentwandler 10 befindet sich in einem Zustand, indem er keinerlei Drehmoment überträgt. In diesem Zustand strömt auch kein Hydraulikfluid durch den Drehmomentwandler 10.

## Patentansprüche

1. Drehmomentwandler (10) für ein Kraftfahrzeug, mit einer Motorabtriebswelle (14), einer Getriebeeingangswelle (16), einem Pumpenrad (18), einer Turbine (22) sowie einer Überbrückungskupplung (26, 28, 30, 32) zwischen Motorabtriebswelle (14) und Getriebeeingangswelle (16),
**dadurch gekennzeichnet, dass**
die Überbrückungskupplung (26, 28, 30, 32) dafür eingerichtet ist, die Getriebeeingangswelle (16) entweder mit der Motorabtriebswelle (14) oder mit der Turbine (22) oder mit keiner von beiden zu kuppeln.

2. Drehmomentwandler (10) nach Anspruch 1,
**dadurch gekennzeichnet, dass**
der Drehmomentwandler (10) genau zwei äußere Anschlüsse (38, 46) für Hydraulikfluid aufweist, einen Anschluss (38) für unter einem Wandlerladedruck (CC) stehendes Hydraulikfluid und einen Anschluss (46) für unter einem Wandlerentladedruck (CDC) stehendes Hydraulikfluid.

3. Drehmomentwandler (10) nach Anspruch 2,
**dadurch gekennzeichnet, dass**
die Überbrückungskupplung (26, 28, 30, 32) ein im Wesentlichen scheibenförmiges, fluiddichtes Kupplungselement (28) aufweist, das auf einer Seite von dem unter Wandlerladedruck (CC) stehenden Hydraulikfluid beaufschlagt wird und auf einer entgegengesetzten Seite von dem unter Wandlerentladedruck (CC) stehenden Hydraulikfluid beaufschlagt wird.

4. Drehmomentwandler (10) nach Anspruch 2 oder 3,
**dadurch gekennzeichnet, dass**
die Differenz zwischen Wandlerladedruck (CC) und Wandlerentladedruck (CDC) festlegt, ob die Überbrückungskupplung (26, 28, 30, 32) die Getriebeeingangswelle (16) mit der Motorabtriebswelle (14) oder mit der Turbine (22) oder mit keiner von beiden kuppelt.

5. Drehmomentwandler (10) nach Anspruch 4,
**dadurch gekennzeichnet, dass**
die Überbrückungskupplung (26, 28, 30, 32) die Getriebeeingangswelle (16) mit der Motorabtriebswelle (14) kuppelt, wenn der Wandlerladedruck (CC) kleiner als der Wandlerentladedruck (CDC) ist, dass die Überbrückungskupplung (26, 28, 30, 32) die Getriebeeingangswelle (16) mit der Turbine (22) kuppelt, wenn der Wandlerladedruck (CC) größer als der Wandlerentladedruck (CDC) ist, und dass die Überbrückungskupplung (26, 28, 30, 32) die Getriebeeingangswelle (16) weder mit der Motorabtriebswelle (14) noch mit der Turbine (22) kuppelt, wenn der Wandlerladedruck (CC) im Wesentlichen gleich dem Wandlerentladedruck (CDC) ist.

6. Drehmomentwandler (10) nach einem der vorhergehenden Ansprüche,
**dadurch gekennzeichnet, dass**
die Überbrückungskupplung (26, 28, 30, 32) ein im Wesentlichen scheibenförmiges Kupplungselement (26) aufweist, das sich rings um die Getriebeingangswelle (16) erstreckt und drehfest damit verbunden ist, wobei ein ringförmiger radial äußerer Abschnitt (28) des scheibenförmigen Kupplungselements (26) zwei einander axial entgegengesetzte Reibflächen aufweist, von denen die eine Reibfläche einer fest mit der Motorabtriebswelle (14) verbundenen Reibfläche (30) gegenüberliegt und die andere Reibfläche einer fest mit der Turbine (22) verbundenen Reibfläche (32) gegenüberliegt.

7. Drehmomentwandler (10) nach Anspruch 6,
**dadurch gekennzeichnet, dass**
die fest mit der Motorabtriebswelle (14) verbundene Reibfläche (30) eine Reibfläche (30) an einem Wandlergehäuse (20) ist, welches fest mit der Motorabtriebswelle (14) verbunden ist und welches das Pumpenrad (18) trägt.

8. Drehmomentwandler (10) nach Anspruch 6 oder 7,
**dadurch gekennzeichnet, dass**
die fest mit der Turbine (22) verbundene Reibfläche (32) von einem ringförmigen Vorsprung an der Turbine (22) getragen wird.

9. Drehmomentwandler (10) nach einem der vorhergehenden Ansprüche,
**dadurch gekennzeichnet, dass**
die Überbrückungskupplung (26, 28, 30, 32) außerdem einen Torsionsdämpfer (34) aufweist, insbesondere einen Torsionsdämpfer (34), der in ein im Wesentlichen scheibenförmiges Kupplungselement (26) integriert ist.
